# EUROPÄISCHE PATENTSCHRIFT

(11) **EP 2 208 270 B1**
(45) Veröffentlichungstag und Bekanntmachung des Hinweises auf die Patenterteilung: **07.09.2011**
(21) Anmeldenummer: 08860626.4
(22) Anmeldetag: 04.11.2008
(51) Int. Cl.: H02G 5/06

(54) **SCHOTTISOLATOR**
PARTITION INSULATOR
ISOLATEUR DE CLOISONNEMENT

(30) Priorität: 09.11.2007 AT 18102007; 21.03.2008 AT 5112008
(43) Veröffentlichungstag der Anmeldung: 21.07.2010
(73) Patentinhaber: Kuvag Gmbh & Co Kg, 4720 Neumarkt im Hausruckkreis (AT)
(72) Erfinder: PRKA, JOHANN, A-4901 Ottnang/Hausruck (AT); GROISBÖCK, FRANZ, A-4710 St. Georgen bei Grieskirchen (AT); VOGL, DANIELA, A-4720 Pötting (AT); WILDHAGER, GERALD, A-4716 Hofkirchen an der Trattnach (AT)
(74) Vertreter: Laminger, Norbert
(86) Internationale Anmeldenummer: PCT/EP2008/064939
(87) Internationale Veröffentlichungsnummer: WO 2009/074402

(56) Entgegenhaltungen:
- EP-A- 0 660 480
- EP-A- 0 744 803
- DE-A1- 10 142 856

## Beschreibung

Die Erfindung betrifft einen Schottisolator, bestehend aus einem im wesentlichen scheibenförmigen Isolierkörper, allenfalls mit einem vorzugsweise metallischen Befestigungsflansch, und mit zumindest einer axial durch diesen Isolierkörper hindurchführenden, vorzugsweise rotationssymmetrischen Elektrode, deren Querschnitt in der Mittelebene des Isolierkörpers größer ist als im Bereich der einander gegenüberliegenden Oberflächen des Isolierkörpers.

Elektrische Schaltanlagen, besonders im Hochspannungsbereich, werden zur Verbesserung der elektrischen Eigenschaften bevorzugt als gasisolierte Schaltanlagen ausgeführt. Die räumliche Abtrennung zwischen den Schaltkammern erfolgt durch Schottisolatoren, wie etwa in der DE 101 42 856, die einen Schottisolator entsprechend dem Oberbegriff von Anspruch 1 offenbart, oder der JP 62-166719 beschrieben. Gasdichte Schottisolatoren ermöglichen einen gasgefüllten Bereich der Schaltanlage von einem angrenzenden Bereich der Schaltanlage gasdicht abzutrennen. Der Schottisolator muss damit einerseits die elektrische Verbindung über die eingegossenen Elektroden und die externen Leiter ermöglichen, andererseits müssen gasdichte Schottisolatoren dem hohen Druck des isolierenden Gases - beispielsweise SF6-Gas - widerstehen.

Neben der Gestalt und Ausführung des Schottisolators sowie der Stärke des Isolierkörpers haben auch die Elektroden maßgeblichen Einfluss auf die Druckfestigkeit und Dichtigkeit des Isolators. Daher wurden auch Maßnahmen zur Verbesserung des Formschlusses zwischen Elektrode und Isolierkörper sowie Möglichkeiten zur Vergrößerung der Haftfläche zwischen Elektrode und Isolator vorgeschlagen, beispielsweise in der DE 3308332 durch Ringbünde und Ringeinschnürungen am Leiter, was aber wegen der sprunghaften Querschnittsänderungen zu nachteiligen Feldverzerrungen führt. Die Patentschrift EP 1 113550 A1 offenbart eine formschlüssige, gasdichte Verbindung zwischen Elektrode und Isolierkörper eines Schottisolators, ohne jedoch die Festigkeitsbeeinflussung des gesamten Isolators durch die Elektrodengestalt zu berücksichtigen.

In der US 4480151 ist eine abdichtende Leiterdurchführung beschrieben, bei welcher der Formschluss zum Isolator durch mehrere zylindrisch und konisch geformte Leitersegmente im Gießharzbereich realisiert wird. Nachteilig ist dabei die lokale Stromdichteüberhöhung in den Leiterabschnitten mit kleinerem Querschnitt als der Anschlussquerschnitt. Die US 4037046 beschreibt eine Leiterdurchführung mit einem zylindrischen und einem konischen Leitersegment, so dass die Durchführung von einer Seite hohen Drücken widerstehen kann. Da die Richtung der Druckbelastung in SF6-Schaltanlagen beim Abschotten im Servicefall jedoch nicht prognostiziert werden kann, ist ein universeller Einsatz in gasisolierten Schaltanlagen nicht möglich.

Die GB 840563 schließlich zeigt eine Elektrode, die aus mehreren, verschiedenartig gestalteten Segmenten besteht. Das mittlere Segment der Elektrode besteht aus einem zylindrischen Abschnitt mit kleinerem Querschnitt als die äußeren Segmente, sodass die ohmschen Verluste in diesem Bereich erhöht sind. Die in diesem Bereich entstehende Verlustwärme ist wegen der geringen thermischen Leitfähigkeit des umgebenden Isoliermaterials nur schwer abzuführen. Weiters zeigt diese Elektrode ein konusförmiges Segment, dessen Querschnitt außerhalb des Isoliermaterials zunimmt, wodurch in nachteiliger Weise die Kriechwege bzw. Isolierstrecken zu benachbarten Elektroden reduziert werden.

Die Aufgabe der vorliegenden Erfindung war ein Schottisolator, der für hohe elektrische Leistungen geeignet ist und für Schaltbelastung ausreichend hohe Sicherheitsreserven aufweist, mit hoher mechanischer Druckfestigkeit, um einen möglichst hohen Berstdruck aufzuweisen.

Die Aufgabe wird gelöst durch einen Schottisolator gemäß dem Anspruch 1.

Vorzugsweise wird für den Schottisolator eine Form gewählt, bei welcher die Dicke des Isolierkörpers von dessen Mitte bis zu einer vorzugsweise beidseitigen radialen, konzentrischen Aufnahme für Dichtelemente, die dem Befestigungsflansch innenseitig vorgelagert sind, abnimmt, wobei der Isolierkörper im Bereich der Aufnahme wiederum annähernd die gleiche Dicke aufweist wie in seiner Mitte.

Gemäß einer bevorzugten Ausführungsform der Erfindung übersteigt die Dicke des Isolierkörpers an keiner Stelle die Dicke des Befestigungsflansches.

Da neben der Gestalt und Ausführung des Schottisolators sowie der Stärke und Form des Isolierkörpers auch die Elektroden maßgeblichen Einfluss auf die Druckfestigkeit und Dichtigkeit des Isolators haben, wird nach einer bevorzugten Ausführungsform der Erfindung weiters vorgeschlagen, dass jede Elektrode in ihrem zentralen Abschnitt, der im Bereich der Mittelebene des Isolierkörpers zu liegen kommt, den größten Querschnitt aufweist und ihr Querschnitt an keiner Stelle geringer ist als an den Elektrodenenden. Mit einer derartigen Elektrodenform kann eine hohe Festigkeit des Isolators und somit hohe Betriebs- und Berstdrücke gewährleistet werden.

Eine erste Ausführungsform einer derartigen Elektrode ist dadurch gekennzeichnet, dass sich an die Elektrodenenden zur Mitte hin ein oder mehrere konvex gekrümmte Segmente anschließen.

Dabei können die sich innerhalb des Isolierkörpers befindlichen Elektrodenenden zylindrisch, konisch, kugelsegmentförmig oder tonnenförmig ausgeführte Mantelflächen aufweisen.

Vorzugsweise ist bei derartigen Elektroden der Übergang zum zentralen Segment der Elektrode ausgehend vom jeweils benachbarten Segment annähernd halbkreisförmig ausgeführt.

Gemäß einer vorteilhaften Ausführungsform ist vorgesehen, dass der Übergang zum zentralen Segment der Elektrode ausgehend vom jeweils benachbarten Segment mit einer annähernd halbkreisförmigen Nutfräsung und einem annähernd halbkreisförmigen konvexen Wulst ausgeführt ist, welcher (wobei dieser) Wulst die Höhe dieses Segments axial überragt.

Auch können die Übergänge zu dem mittleren Elektrodensegment gerundet ausgeführt sein.

Gemäß einem zusätzlichen Merkmal der Erfindung sind die Elektroden von Gießharz umhüllt bzw. mit Kunststoff umspritzt.

Weiters kann vorgesehen sein, dass die Elektroden oberflächenbeschichtet sind. Damit können an den Kontaktseiten geringe Übergangswiderstände und an den Mantelflächen eine gute Anbindung und Haftung zum Isolierkörper bzw. zu einer allfälligen Umhüllung erreicht werden.

Die Anbindung der Elektroden an den Isolierkörper kann auch dadurch verbessert werden, dass die Elektroden sandgestrahlt sind.

Gemäß einer vorteilhaften Ausführungsform des Schottisolators ist vorgesehen, dass jede Elektrode über Gewindebohrungen oder andere Vorrichtungen zum Anschluss von Stromleitern verfügt.

In der nachfolgenden Beschreibung soll die Erfindung unter Bezugnahme auf die beigefügten Zeichnungen näher erläutert werden.

Dabei zeigt die Fig. 1 schematisch eine gasisolierte Schaltanlage, Fig. 2 zeigt den prinzipiellen Aufbau eines Schottisolators, Fig. 3a zeigt die einfachste Form einer Elektrode mit zylindrischer Gestalt, Fig. 3b zeigt eine tonnenförmige Elektrode im aufnehmenden Isolierkörper, eine Elektrode in annähernder Fass-Form ist in Fig. 4a dargestellt, Fig. 4b zeigt einen mit einer derartigen Elektrode ausgeführten Schottisolator, Fig. 5 zeigt einen Schottisolator mit einem erfindungsgemäßen Isolierkörper in seiner grundlegenden Ausführungsform, Fig. 6 ist ein Längsschnitt durch eine besonders vorteilhaft ausgeführte Elektrode und Fig. 7 zeigt einen Längsschnitt durch eine weitere Ausführungsform einer erfindungsgemäßen Elektrode.

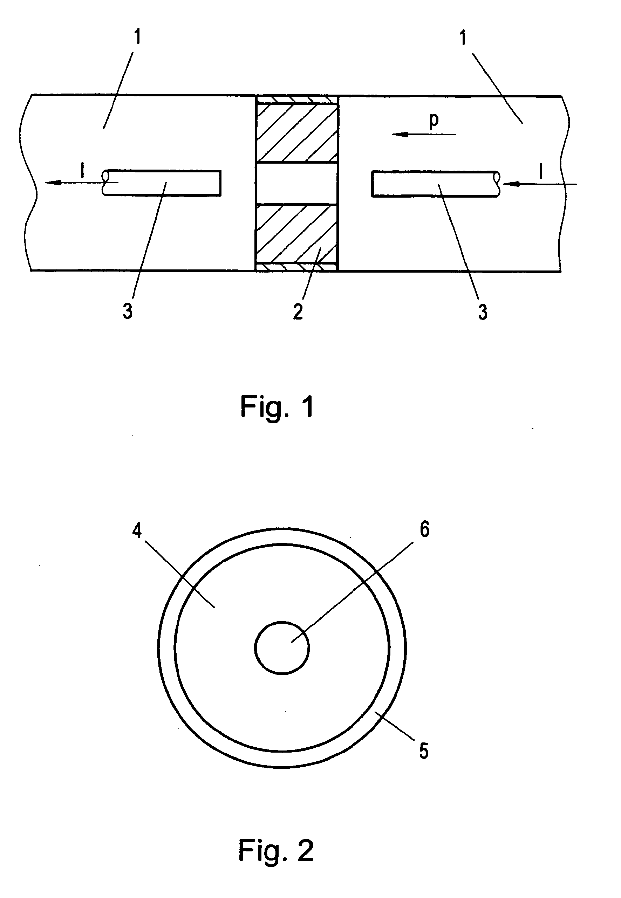

Wie in Fig. 1 schematisch dargestellt ist, dienen Schottisolatoren 2 dazu, die Schaltkammern 1 gas- und druckdicht voneinander zu trennen. In Fig. 1 sind weiters die Stromleiter 3 schematisch dargestellt, welche als Massivleiter oder als bewegliche Trennelektroden ausgeführt werden können. Der elektrische Energiefluss erfolgt üblicherweise über einen Stromleiter von einem Schaltkammersegment durch die Elektroden des Schottisolators zum Stromleiter im angrenzenden Schaltkammersegment. Für bestimmte Betriebsfälle kann der Druck des Isoliergases nur von einer Seite auftreten, wie dies schematisch durch das Symbol p in Fig. 1 dargestellt ist. Dies erfordert hohe mechanische Festigkeiten vom Schottisolator 2.

Fig. 2 zeigt den prinzipiellen Aufbau eines Schottisolators 2. Dieser besteht aus einem Isolierkörper 4, beispielsweise aus Epoxydharz, der meist in einem Metallflansch 5 eingegossen ist. Dieser Metallflansch ermöglicht die unterbrechungsfreie Erdung der Außenhülle der Schaltanlage und eine zweckmäßige Befestigung des Schottisolators in der Schaltanlage. Weiters sind eine oder mehrere Elektroden 6 in dem Isolierkörper 4 eingegossen.

Übliche Schottisolatoren verfügen über eine oder drei Elektroden 6, die im Isolierkörper des Schottisolators eingegossen oder mit diesem umspritzt sind. Zum Erreichen geringer Übergangswiderstände werden diese Elektroden 6 an den Kontaktseiten gegebenenfalls mit einem besonderen leitfähigen Material beschichtet. Die Mantelflächen der Elektroden 6 werden gelegentlich durch Sandstrahlen oder Beschichtungen vorbehandelt, um die Anbindung und Haftung zum umhüllenden Gießharz zu verbessern - dadurch wird die Festigkeit des Schottisolators verbessert und der Schottisolator kann höheren Betriebsdrücken standhalten.

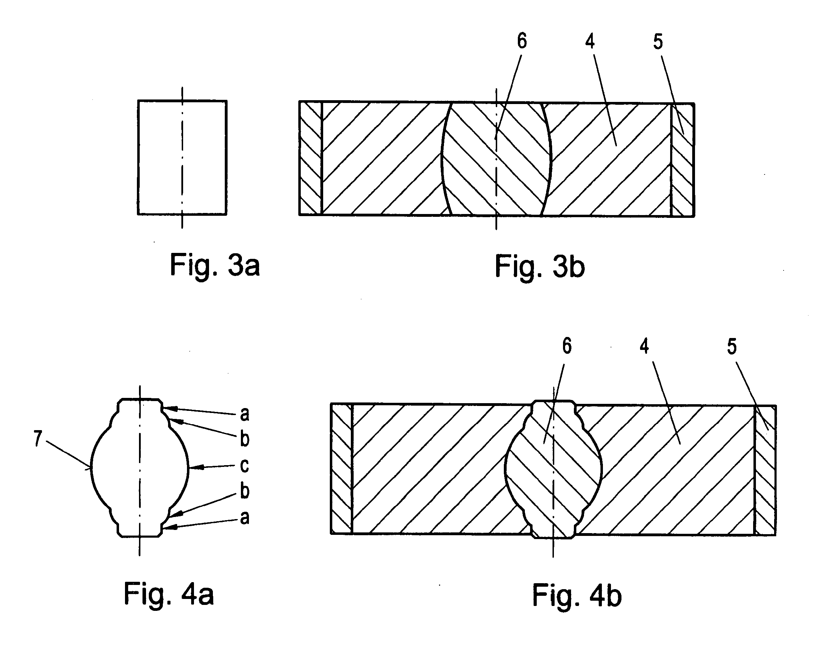

Fig. 3a zeigt die einfachste Form einer Elektrode 6 mit zylindrischer Gestalt. Der Isolierkörper 4 wird meist im Gießprozess hergestellt, dabei werden die Elektroden 6 umgossen. Bei axialer Druckbelastung des Isolators 2 begrenzt die Zugscherfestigkeit zwischen Gießharz und Elektrode 6 die Festigkeit des Isolators 2. Die Festigkeit des Gießharzkörpers selbst wird wesentlich durch dessen Stärke beeinflusst, die aus technischen und wirtschaftlichen Gegebenheiten begrenzt ist. Fig. 3b zeigt eine tonnenförmige Elektrode 6, welche eine bessere Krafteinleitung von der Elektrode 6 zum Isolierkörper 4 ermöglicht. Die Elektrode 6 nach Fig. 3b ist nun einerseits formschlüssig in den Isolierkörper 4 eingebettet, andererseits über eine größere Haftfläche mit dem Gießharzkörper verbunden. Die Oberflächen- und Haftflächenvergrößerung ist durch die Kontur der Tonnenform begrenzt.

Die Elektrode 6 gemäß Fig. 4 zeigt eine Ausführung, die gemeinsam mit dem Isolierkörper 4 die Forderungen von höchster isotroper Druckbelastbarkeit und Gasdichtigkeit erfüllt, ohne starke elektrische Feldverzerrungen und wesentliche, lokale Stromdichteüberhöhungen (besonders in der durch das Gießharz thermisch gut isolierten Mitteleebene) hervorzurufen. Die geometrische Gestalt der Mantelfläche erhöht die mechanische Festigkeit des Schottisolators 2. Die Elektrode 6 verfügt über mehrere geometrische Teilsegmente, wobei die Elektrode 6 vorzugsweise aus einem Stück, beispielsweise durch Drehen, Warmformung oder Giessen, hergestellt ist.

Die symmetrische Elektrode 6 mit maximierter Haftfläche 7 verfügt über zylindrische Mantelflächen a an den gegebenenfalls überstehenden Elektrodenenden, die anschließend in einen tonnenförmiges oder kugelabschnittförmiges Segment b übergehen, an dem sich ein weiteres mittiges, tonnenförmiges Elektrodensegment c mit größerem Durchmesser als die anderen Segmente anschließt. Dadurch wird einerseits die Haftfläche zum Isolierkörper 4 maximiert, andererseits stützt sich die Elektrode 6 im Gießharzkörper oder Isolierkörper 4 formschlüssig ab. Stromdichteüberhöhungen gegenüber dem Anschlussquerschnitt treten nicht auf. Der Übergang zwischen den einzelnen geometrischen Mantelsegmenten ist möglichst gerundet ausgeführt und wird im Folgenden als sanfter Konturverlauf bezeichnet. Der sanfte Konturverlauf ermöglicht dabei eine homogene Feldstärkeverteilung im umgebenden Isolierkörper 4. Natürlich kann die Form von Elektrodensegmenten ersetzt werden. Beispielsweise können konkave, konische oder kugelsegmentförmige Segmente die oberflächennahen tonnenförmigen Segmente ersetzen und können diese Segmente auch durch zylindrische oder konische Segmente voneinander getrennt sein bzw. ineinander übergehen. Ebenso kann das mittlere tonnenförmige Segment beispielsweise durch ein Segment mit Kugel-, Zylinderform oder kugelabschnittsförmiger Gestalt ersetzt werden.

Besonders vorteilhaft ist die Kombination von mindestens zwei äußeren Elektrodensegmenten und einem mittigen Segment mit größerem Durchmesser als der Durchmesser der äußeren Segmente. Vorzugsweise haben die Elektrodensegmente im Bereich des umgebenden Isolationsmaterials konische, tonnenförmige, konkave oder kugelabschnittsförmige Gestalt. Diese Segmente können auch von einem oder mehreren Zylindersegmenten getrennt sein - dies dient der Haftflächenvergrößerung im Anschlussbereich zum umgebenden Isolierkörper 4, zum Formschluss im umgebenden Isolierkörper 4, zur Verstärkung der Biegesteifigkeit des Isolators 2 und zur Gewährleistung der homogenen Feldverteilung im umgebenden Isolierkörper 4. Die Elektroden 6 können zum Anschluss von Stromleitern mit Bohrungen oder Bolzen ausgestattet sein.

Zur Erhöhung des Formschlusses bzw. zur besseren Verklammerung der Elektrode 6 mit dem umgebenden Gießharz wird, wie dies in Fig. 4 zu sehen ist, das mittlere Elektrodensegment mit größerem Außendurchmesser an den Enden bzw. an den Übergängen zu den äußeren Segmenten so gestaltet, dass im Querschnitt durch Rundung bzw. Hinterschneidung eine ausgeprägte Anker- oder Ohrenform 7 geschaffen wird, welche die gesamte Festigkeit des Isolators 2 erhöht.

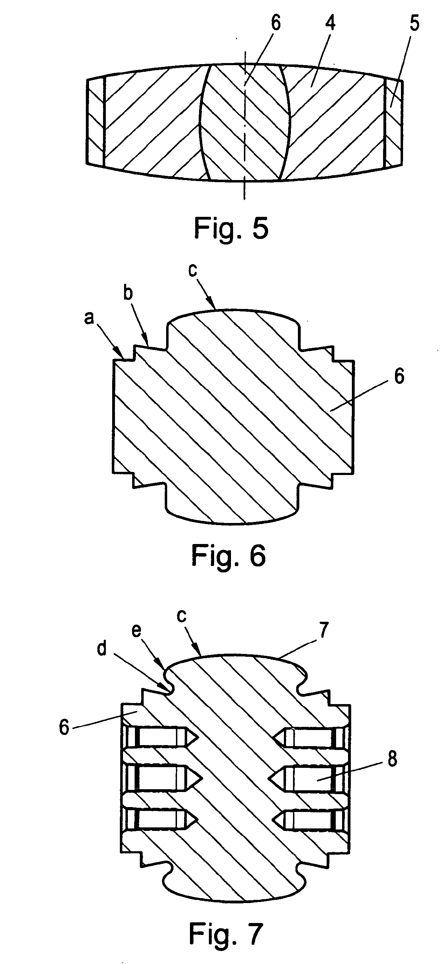

Im Betrieb wirkt auf den Schottisolator 2 der Druck des Isoliergases. Dadurch wird der Schottisolator 2 rotationssymmetrisch durch Biegung belastet, wobei die Biegung vom Rand zum Mittelpunkt zunimmt. Entsprechend dieser auftretenden Biegebelastung des Isolierkörpers 4 wird jener vom radialen Rand zum Mittelpunkt anwachsend symmetrisch verstärkt, wie in Fig. 5 in einer grundlegenden Ausführungsform schematisch dargestellt ist.

Anders ausgedrückt wächst die Schichtdicke des scheibenförmigen Schottisolators vom äußeren Durchmesser bis zum Mittelpunkt an. Sollten beidseitige, konzentrische Dichtelemente (z.B. O-Ringe) von der Isolatorscheibe aufgenommen werden, die dem Metallflansch innenseitig radial vorgelagert sind, dann wächst die Schichtdicke zweckmäßigerweise von den Aufnahmen für diese Dichtelemente zum Mittelpunkt an. Aus konstruktiven Gründen wird man im Kreisringsegment, das die Dichtelemente aufnimmt, maximale Dicke anstreben. Die Schichtdicke kann vom Mittelpunkt kreisbogenförmig, exponentiell oder hyperbolisch abnehmen, die Oberflächen des Isolierkörpers zwischen Mittelpunkt und Rand (bzw. zwischen Mittelpunkt und konzentrischen Aufnahmen, die dem Flansch innenseitig vorgelagert sind) können konkave oder konvexe Gestalt haben.

Vorzugsweise wird die Schichtdicke des Isolierkörpers 4 die Stärke des außen liegenden Montageflansches nicht übersteigen. Zuvor beschriebene Elektroden 6, die in einem solcherart gestalteten Isolierkörper 4 vergossen sind, bewirken eine hohe Festigkeitssteigerung des gesamten Schottisolators 2 . Die oben beschriebenen Elektroden können dem optimierten Querschnittsverlauf dieses Isolierkörpers 4 angepasst werden, insbesondere durch Abweichungen von der Rotationssymmetrie im oberflächennahen Elektrodenabschnitt wegen der unterschiedlichen Materialstärke des umgebenden Isolierkörpers 4.

Die Erfindung beschränkt sich nicht nur auf die beschriebene Anwendung in isoliergasgefüllten Schaltkammern und nicht nur auf Elektroden in Schottisolatoren, sondern kann in allen anderen Bereichen mit ähnlicher Aufgabenstellung eingesetzt werden.

## Patentansprüche

1. Schottisolator, bestehend aus einem im wesentlichen scheibenförmigen Isolierkörper (4), allenfalls mit einem vorzugsweise metallischen Befestigungsflansch (5), und mit zumindest einer axial durch diesen Isolierkörper (4) hindurchführenden, vorzugsweise rotationssymmetrischen Elektrode (6), deren Querschnitt in der Mittelebene des Isolierkörpers (4) größer ist als im Bereich der einander gegenüberliegenden Oberflächen des Isolierkörpers (4), wobei jede Elektrode (6) in ihrem zentralen Abschnitt, der im Bereich der Mittelebene des Isolierkörpers (4) zu liegen kommt, den größten Querschnitt aufweist und ihr Querschnitt an keiner Stelle geringer ist als an den Elektrodenenden, wobei sich an die Elektrodenenden zur Mitte hin ein oder mehrere Segmente anschließen, **dadurch gekennzeichnet, dass** die Dicke des Isolierkörpers (4) von dessen Mitte in allen Richtungen nach außen hin abnimmt, dass die Mantelfläche der sich an die beiden Elektrodenenden anschließenden Segmente sich nach außen hin öffnend konisch ausgeführt sind, und dass der Übergang zum zentralen Segment (c) der Elektrode (6), ausgehend vom jeweils benachbarten Segment, mit einer im Querschnitt annähernd halbkreisförmigen Nutfräsung (d) und einem im Querschnitt annähernd halbkreisförmigen konvexen Wulst (e) ausgeführt ist, wobei dieser Wulst (e) die Höhe dieses Segments (c) axial überragt, so dass eine ausgeprägte "Ohren- oder Ankerform" (7) gebildet wird.

2. Schottisolator nach Anspruch 1, **dadurch gekennzeichnet, dass** die Übergänge zu dem mittleren Elektrodensegment (c) gerundet ausgeführt sind.

3. Schottisolator nach einem der Ansprüche 1 oder 2, **dadurch gekennzeichnet, dass** die Elektroden (6) von Gießharz umhüllt bzw. mit Kunststoff umspritzt sind.

4. Schottisolator nach einem der Ansprüche 1 bis 3, **dadurch gekennzeichnet, dass** die Elektroden (6) oberflächenbeschichtet sind.

5. Schottisolator nach einem der Ansprüche 1 bis 4, **dadurch gekennzeichnet, dass** die Elektroden (6) sandgestrahlt sind.

6. Schottisolator nach einem der Ansprüche 1 bis 5, **dadurch gekennzeichnet, dass** jede Elektrode (6) über Gewindebohrungen oder andere Vorrichtungen zum Anschluss von Stromleitern verfügt.

7. Schottisolator nach einem der Ansprüche 1 bis 6, **dadurch gekennzeichnet, dass** die Oberflächen des Isolierkörpers (4) von dessen Mitte ausgehend konkav gekrümmt sind.

8. Schottisolator nach einem der Ansprüche 1 bis 6, **dadurch gekennzeichnet, dass** die Oberflächen des scheibenförmigen Isolierkörpers (4) konvex gekrümmt sind.

9. Schottisolator nach Anspruch 8, **dadurch gekennzeichnet, dass** der Querschnitt des Isolierkörpers (4) von der Mitte zum Rand hin, bezogen auf die Symmetrieebene des Isolierkörpers (4), annähernd kreisbogenförmig, exponentiell oder hyperbolisch abnimmt.

10. Schottisolator nach einem der Ansprüche 1 bis 9, **dadurch gekennzeichnet, dass** die Dicke des Isolierkörpers (4) von dessen Mitte bis zu einer vorzugsweise beidseitigen radialen, konzentrischen Aufnahme für Dichtelemente, die einem allfälligen Befestigungsflansch (5) innenseitig vorgelagert sind, abnimmt, wobei der Isolierkörper (4) im Bereich der Aufnahme wiederum annähernd die gleiche Dicke aufweist wie in seiner Mitte.

11. Schottisolator nach einem der Ansprüche 1 bis 10, **dadurch gekennzeichnet, dass** die Dicke des Isolierkörpers (4) an keiner Stelle die Dicke des Befestigungsflansches (5) übersteigt.

## Claims

1. Partition insulator comprising an essentially disc-shaped insulating body (4), possibly with a preferably metallic fastening flange (5), and having at least one, preferably rotationally symmetrical, electrode (6) which passes axially through the insulating body (4), the cross-section of the electrode being greater in the central plane of the insulating body (4) than in the region of the oppositely situated surfaces of the insulating body (4), wherein each electrode (6) has the largest cross section in its central section which comes to rest in the region of the center plane of the insulating body (4), and at no point is the cross section of the electrode smaller than that at the electrode ends, wherein one or more segments adjoin the electrode ends toward the center, **characterized in that** the thickness of the insulating body (4) decreases in all directions from its center to the outside, the lateral surface of the segments adjoining the two electrode ends have a conical design which opens to the outside, and the transition to the central segment (c) of the electrode (6), starting from the particular adjoining segment, is provided with a milled groove (d) having an approximately semicircular cross section, and with a convex bead (e) having an approximately semicircular cross section, this bead (e) axially projecting beyond the height of this segment (c), thus forming a pronounced anchor or ear shape (7).

2. Partition insulator according to Claim 1, **characterized in that** the transitions to the center electrode segment (c) have a rounded design.

3. Partition insulator according to one of Claims 1 or 2, **characterized in that** the electrodes (6) are encased in cast resin or extrusion-coated with plastic.

4. Partition insulator according to one of Claims 1 through 3, **characterized in that** the electrodes (6) are coated on the surface.

5. Partition insulator according to one of Claims 1 through 4, **characterized in that** the electrodes (6) are sandblasted.

6. Partition insulator according to one of Claims 1 through 5, **characterized in that** each electrode (6) has threaded holes or other devices for connecting current conductors.

7. Partition insulator according to one of Claims 1 through 6, **characterized in that** the surfaces of the insulating body (4) have a concave curvature starting from the center of the insulating body.

8. Partition insulator according to one of Claims 1 through 6, **characterized in that** the surfaces of the disc-shaped insulating body (4) have a convex curvature.

9. Partition insulator according to Claim 8, **characterized in that** the cross section of the insulating body (4) decreases from the center to the edge, approximately in a circular arc shape, exponentially, or hyperbolically relative to the plane of symmetry of the insulating body (4).

10. Partition insulator according to one of Claims 1 through 9, **characterized in that** the thickness of the insulating body (4) decreases from its center to a concentric receptacle for sealing elements which is preferably radial on both sides, and which is situated in the interior, upstream from a possible fastening flange (5), and in the region of the receptacle the insulating body (4) having approximately the same thickness as at its center.

11. Partition insulator according to one of Claims 1 through 10, **characterized in that** the thickness of the insulating body (4) does not exceed the thickness of the fastening flange (5) at any point.

## Revendications

1. Isolateur de cloisonnement constitué d'un corps isolant (4) sensiblement en forme de disque, éventuellement avec une bride de fixation (5), de préférence métallique, et avec au moins une électrode (6), de préférence à symétrie de rotation, traversant axialement le corps isolant (4), la section de l'électrode dans le plan médian du corps isolant (4) étant plus grande que dans la région des surfaces opposées l'une à l'autre du corps isolant (4), chaque électrode (6) ayant sa section la plus grande dans sa partie centrale qui vient se situer dans la région du plan médian du corps isolant (4) et sa section n'étant à aucun endroit plus petite qu'aux extrémités des électrodes, un ou plusieurs segments se rejoignant aux extrémités des électrodes vers le milieu, **caractérisé par le fait que** l'épaisseur du corps isolant (4) diminue à partir de ce milieu dans toutes les directions vers l'extérieur, que les surfaces d'enveloppe des segments se rejoignant aux deux extrémités d'électrode sont conçues coniques s'ouvrant vers l'extérieur et que la jonction jusqu'au segment central (c) de l'électrode (6), à partir de chaque segment voisin, est réalisée avec un fraisage à rainure (d) en forme de demi-cercle se rapprochant dans la section et un bourrelet (e) convexe en forme de demi-cercle se rapprochant dans la section, ce bourrelet (e) dépassant axialement de la hauteur de ce segment (c), de façon à prendre une « forme d'oreille ou d'ancre » (7) marquée.

2. Isolateur de cloisonnement selon la revendication 1, **caractérisé par le fait que** les transitions jusqu'au segment d'électrode médian (c) sont conçues arrondies.

3. Isolateur de cloisonnement selon l'une des revendications 1 ou 2, **caractérisé par le fait que** les électrodes (6) sont gainées de résine de coulée ou sont enrobées de matière plastique.

4. Isolateur de cloisonnement selon l'une des revendications 1 à 3 **caractérisé par le fait que** les électrodes (6) ont un revêtement de surface.

5. Isolateur de cloisonnement selon l'une des revendications 1 à 4, **caractérisé par le fait que** les électrodes (6) sont sablées.

6. Isolateur de cloisonnement selon l'une des revendications 1 à 5, **caractérisé par le fait que** chaque électrode (6) est destinée à être connectée à des conducteurs de courant par des trous taraudés ou d'autres dispositifs.

7. Isolateur de cloisonnement selon l'une des revendications 1 à 6, **caractérisé par le fait que** les surfaces du corps isolant (4) sont courbées de façon concave en partant de leur milieu.

8. Isolateur de cloisonnement selon l'une des revendications 1 à 6, **caractérisé par le fait que** les surfaces du corps isolant (4) en forme de disque sont courbées de façon convexe.

9. Isolateur de cloisonnement selon la revendication 8, **caractérisé par le fait que** les sections du corps isolant diminuent de façon exponentielle ou hyperbolique à partir de son milieu vers le bord, formant un arc de cercle se rapprochant par rapport au plan de symétrie du corps isolant (4).

10. Isolateur de cloisonnement selon l'une des revendications 1 à 9, **caractérisé par le fait que** l'épaisseur du corps isolant (4) diminue à partir de son milieu jusqu'à un logement concentrique, de préférence radial des deux côtés pour des éléments étanches qui sont montés en amont du côté intérieur d'une bride de fixation (5) éventuelle, le corps isolant (4) ayant la même épaisseur en se rapprochant de nouveau dans la région du logement que dans son milieu.

11. Isolateur de cloisonnement selon l'une des revendications 1 à 10, **caractérisé par le fait que** l'épaisseur du corps isolant (4) ne dépasse en aucun point de l'épaisseur de la bride de fixation (5).
